# EUROPEAN PATENT APPLICATION

(11) **EP 2 629 529 A2**
(43) Date of publication of application: **21.08.2013**
(21) Application number: 11832768.3
(22) Date of filing: 13.10.2011
(51) Int. Cl.: H04N 13/00

(54) **METHOD AND APPARATUS FOR TRANSMITTING STEREOSCOPIC VIDEO INFORMATION**

(30) Priority: 13.10.2011 KR 20110104848; 13.10.2010 KR 20100099689
(71) Applicant: Electronics And Telecommunications Research Institute, Daejeon-si 305-700 (KR); University-Industry Cooperation Group of Kyung Hee University, Gyeonggi-do 446-701 (KR)
(72) Inventor: YUN, Kug Jin, Daejeon-si 305-759 (KR); CHEONG, Won Sik, Daejeon-si 305-761 (KR); LIM, Young Kwon, Goyang-si Gyeonggi-do 410-050 (KR); LEE, Bong Ho, Daejeon-si 305-747 (KR); LEE, Gwang Soon, Daejeon-si 305-747 (KR); HUR, Nam Ho, Daejeon-si 305-768 (KR); LEE, Soo In, Daejeon-si 302-772 (KR); KIM, Kyu Heon, Seoul 135-100 (KR); PARK, Gwang Hoon, Seongnam-si Gyeonggi-do 463-831 (KR); SUH, Doug Young, Seongnam-si Gyeonggi-do 463-779 (KR)
(74) Representative: Betten & Resch
(86) International application number: PCT/KR2011/007636
(87) International publication number: WO 2012/050381

(57) **Abstract**

Provided are a method and apparatus for transmitting stereoscopic video information based on digital broadcasting. The method for transmitting stereoscopic video information according to the present invention comprises: constructing a signaling table including stream-type information; and transmitting the video information including the signaling table information and video data information. According to the present invention, various types of stereoscopic video services may be provided.

## Description

### [Technical Field]

The present invention relates to digital broadcasting, and more particularly, to a method and an apparatus for transmitting stereoscopic video information.

### [Background Art]

A digital broadcasting service using a three-dimensional (3D) video has been prominent together with an ultra definition television (UDTV) as the next generation broadcasting service subsequent to a high definition television (HDTV). In accordance with the development of related technologies such as release of a high definition commercial stereoscopic display, or the like, a 3DTV service capable of viewing a 3D video in each home is expected to be provided in a few years.

A 3D broadcasting service that has currently been provided commercially or on a trial basis is a service using a stereoscopic video mainly configured of a left image an a right image. In addition, as a stereoscopic video service scheme, a frame compatible scheme in which left/right images are produced as a single picture using a format such as a side-by-side format, a top and bottom format, or the like, encoded, and then transmitted, a service compatible scheme in which left/right images are separately encoded and then transmitted, and the like, may be used.

As protocol for digital broadcasting, for example, program and system information protocol (PSIP), or the like, may be used. The PSIP has a configuration similar to program specific information (PSI) of a moving picture experts group (MPEG) system. The PSIP or the PSI may be configured of a set of tables having the same purpose, and each of the tables may be divided into several sections and be then transmitted.

### [Disclosure]

### [Technical Problem]

The present invention provides a method for transmitting stereoscopic video information capable of providing various forms of stereoscopic video services.

The present invention also provides an apparatus for transmitting stereoscopic video information capable of providing various forms of stereoscopic video services.

### [Technical Solution]

In an aspect, a method for transmitting stereoscopic video information based on digital broadcasting is provided. The method includes: configuring a signaling table including stream type information including information indicating a stereoscopic video service scheme; and transmitting the video information including the signaling table information and video data information, wherein the stream type information includes a stream type of an additional video included in a service compatible based stereoscopic video.

The signaling table may be a program map table (PMT) of program specific information (PSI), a virtual channel table (VCT) of grogram and system information protocol (PSIP), or an event information table (EIT) of the PSIP.

The signaling table may include information indicating whether a type of a broadcasting service that is currently being provided is a 2D (monoscopic) broadcasting service or a 3D broadcasting service.

The signaling table may include a program level descriptor including information indicating a program type provided in the digital broadcasting, and the information indicating whether the type of the broadcasting service that is currently being provided is the 2D (monoscopic) broadcasting service or the 3D broadcasting service may be defined in the grogram level descriptor.

The signaling table may include information indicating whether a current stream is a stream corresponding to a left image or a stream corresponding to a right image.

The signaling table may include a stream level descriptor including information indicating characteristics of elementary streams configuring the video data, and the information indicating whether the current stream is the stream corresponding to the left image or the stream corresponding to the right image may be defined in the stream level descriptor.

The signaling table may include information indicating whether a current stream is a stream corresponding to a base video or a stream corresponding to the additional video.

The signaling table may include a stream level descriptor including information indicating characteristics of elementary streams configuring the video data, and the information indicating whether the current stream is the stream corresponding to the base video or the stream corresponding to the additional video may be defined in the stream level descriptor.

In another aspect, an apparatus for transmitting stereoscopic video information based on digital broadcasting is provided. The apparatus includes: an video information generator configuring a signaling table including stream type information including information indicating a stereoscopic video service scheme; and a transmitter transmitting the video information including the signaling table information and video data information, wherein the stream type information includes a stream type of an additional video included in a service compatible based stereoscopic video.

The signaling table may include information indicating whether a type of a broadcasting service that is currently being provided is a 2D (monoscopic) broadcasting service or a 3D broadcasting service.

The signaling table may include a program level descriptor including information indicating a program type provided in the digital broadcasting, and the information indicating whether the type of the broadcasting service that is currently being provided is the 2D (monoscopic) broadcasting service or the 3D broadcasting service may be defined in the program level descriptor.

The signaling table may include information indicating whether a current stream is a stream corresponding to a left image or a stream corresponding to a right image.

The signaling table may include a stream level descriptor including information indicating characteristics of elementary streams configuring the video data, and the information indicating whether the current stream is the stream corresponding to the left image or the stream corresponding to the right image may be defined in the stream level descriptor.

The signaling table may include information indicating whether a current stream is a stream corresponding to a base video or a stream corresponding to the additional video.

The signaling table may include a stream level descriptor including information indicating characteristics of elementary streams configuring the video data, and the information indicating whether the current stream is the stream corresponding to the base video or the stream corresponding to the additional video may be defined in the stream level descriptor.

### [Advantageous Effects]

With the method for transmitting stereoscopic video information according to the exemplary embodiment of the present invention, various forms of stereoscopic video services may be provided.

With the apparatus for transmitting stereoscopic video information according to the exemplary embodiment of the present invention, various forms of stereoscopic video services may be provided.

### [Description of Drawings]

FIG. 1 is a flow chart schematically showing a method for transmitting stereoscopic video information according to an exemplary embodiment of the present invention.
FIG. 2 is a diagram showing an example of a program map table (PMT) structure for a digital broadcasting service.
FIG. 3 is a diagram schematically showing an example of a configuration of an added stream type according to the present invention.
FIG. 4 is a diagram schematically showing an example of a descriptor structure used for a frame compatible based stereoscopic video service.
FIG. 5 is a diagram schematically showing another example of a descriptor structure used for a frame compatible based stereoscopic video service.
FIG. 6 is a diagram schematically showing an example of a descriptor structure used for a service compatible based stereoscopic video service.
FIG. 7 is a diagram schematically showing another example of a descriptor structure used for a service compatible based stereoscopic video service.
FIG. 8 is a block diagram schematically showing an apparatus for transmitting stereoscopic video information according to an exemplary embodiment of the present invention.

### [Mode for Invention]

Hereinafter, exemplary embodiments of the present invention will be described in detail with reference to the accompanying drawings. In describing exemplary embodiments of the present invention, well-known functions or constructions will not be described in detail since they may unnecessarily obscure the understanding of the present invention.

It will be understood that when an element is simply referred to as being 'connected to' or 'coupled to' another element without being 'directly connected to' or 'directly coupled to' another element in the present description, it may be 'directly connected to' or directly coupled to' another element or be connected to or coupled to another element, having the other element intervening therebetween. Further, in the present invention, "comprising" a specific configuration will be understood that additional configuration may also be included in the embodiments or the scope of the technical idea of the present invention.

Terms used in the specification, 'first', 'second', etc. can be used to describe various components, but the components are not to be construed as being limited to the terms. The terms are only used to differentiate one component from other components. For example, the 'first' component may be named the 'second' component and the 'second' component may also be similarly named the 'first' component, without departing from the scope of the present invention.

Furthermore, constitutional parts shown in the embodiments of the present invention are independently shown so as to represent different characteristic functions. Thus, it does not mean that each constitutional part is constituted in a constitutional unit of separated hardware or one software. In other words, each constitutional part includes each of enumerated constitutional parts for convenience. Thus, at least two constitutional parts of each constitutional part may be combined to form one constitutional part or one constitutional part may be divided into a plurality of constitutional parts to perform each function. The embodiment where each constitutional part is combined and the embodiment where one constitutional part is divided are also included in the scope of the present invention, if not departing from the essence of the present invention.

In addition, some of constituents may not be indispensable constituents performing essential functions of the present invention but be selective constituents improving only performance thereof. The present invention may be implemented by including only the indispensable constitutional parts for implementing the essence of the present invention except the constituents used in improving performance. The structure including only the indispensable constituents except the selective constituents used in improving only performance is also included in the scope of the present invention.

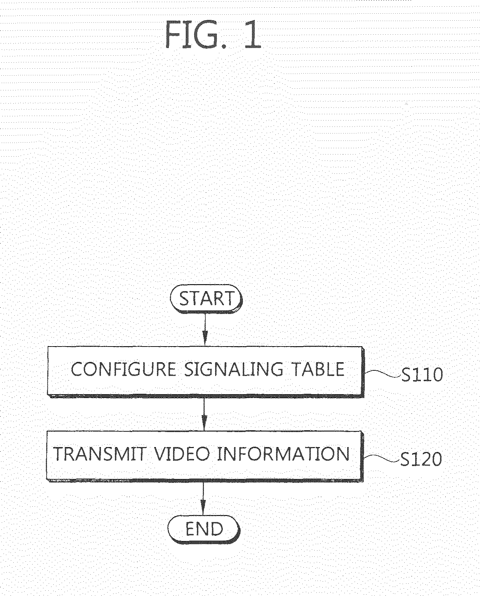

FIG. 1 is a flow chart schematically showing a method for transmitting stereoscopic video information according to an exemplary embodiment of the present invention. The method for transmitting stereoscopic video information according to the exemplary embodiment of FIG. 1 may be applied to a digital broadcasting based stereoscopic video service.

As a scheme of providing a stereoscopic video service, there are many schemes. For example, a frame compatible (frame-packing) scheme, a service compatible scheme, a frame compatible-compatible scheme, and the like, may be used for the stereoscopic video service.

The frame compatible scheme is a stereoscopic video service scheme of allowing both of left/right images to be included in a single frame, encoded, and then transmitted. As an video format used in the frame compatible scheme, there are various forms of video formats. For example, a side by side format, a top and down format, a check board format, or the like, may be used.

In the frame compatible scheme, video information may be transceived using existing media, broadcasting devices, and terminals that are used in existing two-dimensional (2D) broadcasting, or the like. However, in the case in which the video information is received and reproduced through an existing 2D terminal, each of left/right images is simultaneously reproduced by half on a single screen, such that a 2D video having the same form as that of the existing 2D broadcasting may not be reproduced.

The service compatible scheme is a stereoscopic video service scheme of enabling the 2D video having the same form as that of the existing 2D broadcasting to be viewed even in the existing 2D terminal. For example, in the service compatible scheme, each of left/right images may be encoded as a separate stream and then transmitted. Here, one of the left and right images is called a base video, the other thereof is called an additional video, and an encoding scheme used in the existing 2D broadcasting may be used for the base video. As an example, the base video may be encoded through a PEG-2 vedio encoding scheme and then transmitted, and the additional video may be encoded through an advanced video cording (AVC) scheme, or the like, and then transmitted. The stereoscopic video service in the case in which the service compatible scheme is used may maintain compatibility with the existing 2D medium or the existing 2D broadcasting.

The frame compatible-compatible scheme is a stereoscopic video service scheme of providing a separate enhancement stream together with an video stream provided in the frame compatible scheme to increase resolution of an video. Here, each of the video stream provided in the frame compatible scheme and the enhance stream may be called a base frame compatible stream and an additional frame compatible stream.

The stereoscopic video service in the case in which the frame compatible-compatible scheme is used may maintain compatibility with a 3D display provided by the frame compatible scheme and provide a stereoscopic video having improved resolution as compared to the frame compatible scheme.

The method for transmitting stereoscopic video information according to the example of FIG. 1 may be applied to the above-mentioned various schemes of stereoscopic video services.

Referring to FIG. 1, an apparatus for transmitting stereoscopic video information configures a signaling table (S110), In the signaling table, information used to receive and reproduce video data in an apparatus for receiving video information, for example, information indicating a program type, information indicating characteristics of encoding streams configuring video data, and the like, may be defined.

The information and/or protocol used to receive video data and reproduce an video may include, for example, program specific information (PSI), program and system information protocol (PSIP), and the like.

The PSI means metadata including information required for demultiplexing transport streams (TSs) and reproducing video information in a table format, in the MPEG-2. The apparatus for receiving video information may refer to the PSI information in order to discriminate a TS packet required for conversion of an elementary stream (ES), selection of a channel, or the like.

As an example, the PSI may include tables such as a grogram association table (PAT), a conditional access table (CAT), a program map table (PMT), and a network information table (NIT). Particularly, the PMT may include program elements configuring a single program, information on video streams configuring video data in the program, and the like.

The PSIP, which is protocol associated with digital broadcasting, is communication protocol used to transmit information on each channel of the transport stream. The PSIP may include a system time table (STT) transferring time information, a master guide table (MGT) managing a transmission table, a virtual channel table (VCT) providing virtual channel information, an event information table (EIT) providing each grogram information, and the like. The PSIP may have a configuration similar to that of the PSI.

The signaling table may be the PMT of the PSI and/or the VCT or the EIT of the PSIP. Each information included in the signaling table may be defined in a stream type and/or a descriptor of the PMT, a stream type and/or a descriptor of the VCT, or a descriptor of the EIT. In addition, since the PSIP may have may have a configuration similar to that of the PSI, the signaling table will be described based on the PMT hereinafter for convenience.

A description of a configuration of the PMT for digital broadcasting and information included therein will be described below.

Again referring to FIG. 1, the apparatus for transmitting stereoscopic video information transmits video information including the configured signaling table information and video data information to the apparatus for receiving video information (S120).

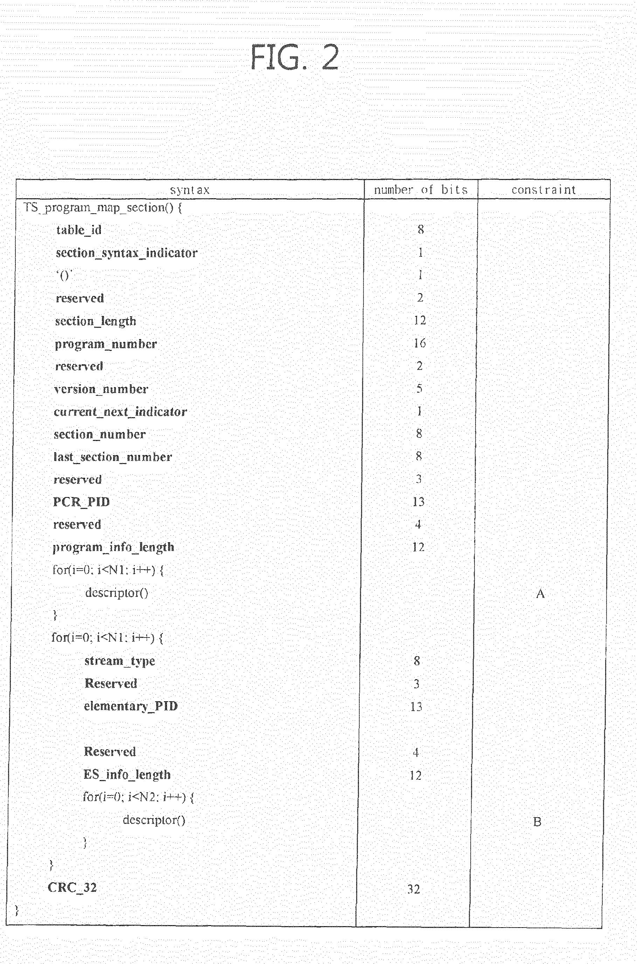

FIG. 2 is a diagram showing an example of a program map table (PMT) structure for a digital broadcasting service.

The PMT may include a program level descriptor in which information indicating a program type provided in the digital broadcasting is defined, a stream level descriptor in which information indicating characteristics of elementary streams (ESs) configuring the video data is defined, a stream type, and the like. The PMT may provide information for indentifying a program, information on characteristics of encoding steams, and the like. Hereinafter, the program level descriptor and the stream level descriptor will be collectively called a descriptor.

Referring to FIG. 2, the program level descriptors may be positioned at a 'A' portion within a PMT syntax, and the stream level descriptors may be positioned at a 'B' portion within the PMT syntax.

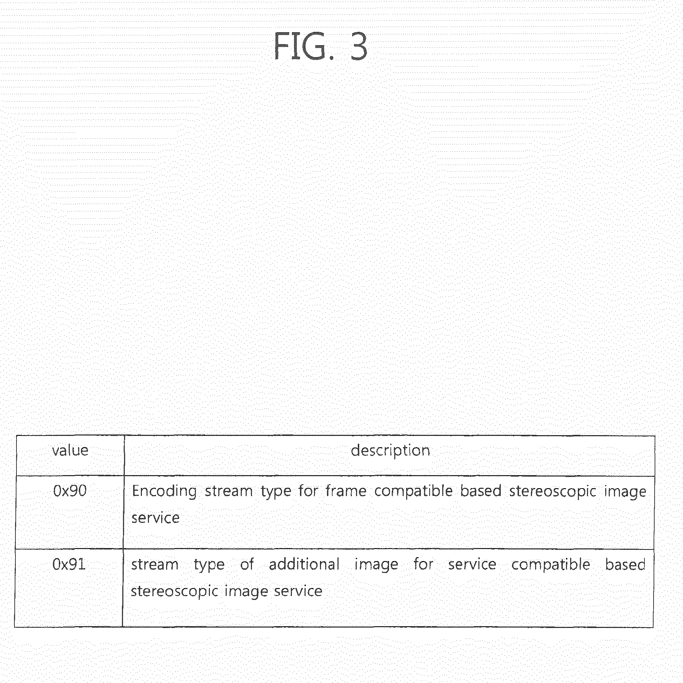

FIG. 3 is a diagram schematically showing an example of a configuration of an added stream type according to the present invention.

The stream type may be used to define a codec type of the encoding stream or be used to identify a form and/or a scheme of a stereoscopic video service. Since the stereoscopic video service may be provided using the frame compatible scheme, the service compatible scheme, the frame compatible-compatible scheme, and the like, stream types defined in an example of FIG. 3 may be used in order to discriminate a scheme in which the stereoscopic video service is provided.

Referring to the example of FIG. 3, a value of 0x90 may be allocated to an encoding stream type for a frame compatible based stereoscopic video service, and a value of 0x91 may be allocated to a stream type of an additional video for a service compatible based stereoscopic video service. The values allocated to each stream type are not limited to 0x90, 0x91, or the like, but may be differently defined according to the setting.

When a new stream type is set as in the example of FIG. 3, an existing receiver may not recognize the new stream type. Therefore, the setting of the new stream type has an advantage in that it may allow an video corresponding to the new stream type not to be reproduced in the existing receiver.

As another example, the added stream type may include information on a specific codec type as well as information on a service scheme. Here, when the same service scheme is used but different codec types are used, different stream types need to be used. However, in this case, information indicating the codec type may not be defined in the descriptor.

As still another example, an existing stream type may be used without allocating a new stream type to the stereoscopic video service. Even in this case, information indicating the codec type may not be defined in the descriptor. An example of a case in which the information indicating the codec type is defined in the descriptor will be described below.

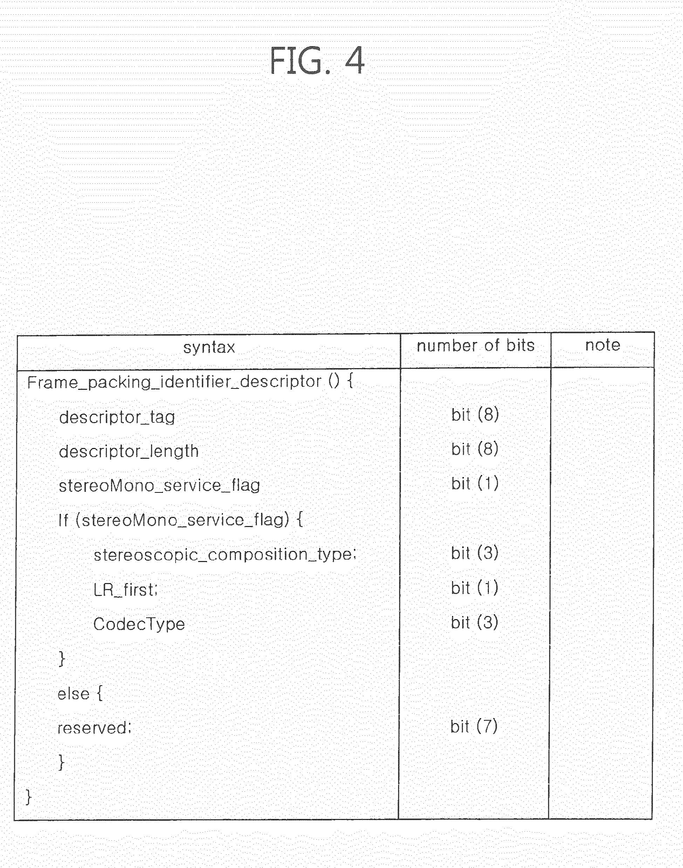

FIG. 4 is a diagram schematically showing an example of a descriptor structure used for a frame compatible based stereoscopic video service. The frame compatible based stereoscopic video service corresponds to the case in which the value of the stream type is 0x90 in the example of FIG. 3. When the frame compatible scheme of service is provided, a form, a configuration, and the like, of the video may be identified through the descriptor according to the example of FIG. 4.

Hereinafter, descriptors according to the example of the present invention are not limited to their names. That is, descriptors performing roles that are equal or similar to those of the descriptors according to the example of the present invention will fall within the scope of the present invention.

Further, hereinafter, each of syntax elements included in the descriptor will be called a field. Hereinafter, fields defined in the example of the present invention are not limited to their names. That is, fields indicating information that is equal or similar to that of the fields will fall within the scope of the present invention. In addition, all of the fields defined in the present invention need not to be used. That is, the fields may be used or may not be used as needed.

Referring to the example of FIG. 4, a descriptor may include information indicating whether a type of a broadcasting service that is currently being provided is a 2D (monoscopic) broadcasting service or a 3D broadcasting service. As an example, a field called stereoMono_service_flag may be defined in the descriptor in order to indicate the above-mentioned information.

In order to distinguish between the 2D broadcasting service and the 3D broadcasting service, information indicating whether a current grogram is a 2D broadcasting program or a 3D broadcasting program is required. Whether the current program is the 2D (monoscopic) broadcasting program or the 3D broadcasting program and/or whether the type of the broadcasting service that is currently being provided is the 2D (monoscopic) broadcasting service or the 3D broadcasting service may be distinguished by the stereoMono_service_flag according to the example, and may also be distinguished by whether or not the stream type defined in the example of FIG. 3 or the descriptor related thereto is present. The information distinguishing between the 2D broadcasting service and the 3D broadcasting service may be used for a service in which the 2D broadcasting and the 3D broadcasting are mixed according to a time, or the like.

In addition, the descriptor may include information indicating a type of an video format configuring the stereoscopic video. That is, which of video formats such as a side by side format, a top and down format, a left/right view sequence, and the like, is used may be discriminated according to the information. As an example, a field called Stereoscopic_composition-type may be defined in the descriptor in order to indicate the above-mentioned information.

The descriptor may include information indicating positions of left and right images and/or information indicating whether a current video is a base video or an additional video. As an example, a field called LR_first may be defined in the descriptor in order to indicate the above-mentioned information. The field may indicate various form of information according to an video format. The following Table 1 shows an example of left and right image position information allocation according to a value of a syntax element and an video format.

**[Table 1]**

| | '1' | '0' |
|---|---|---|
| Side by side | left+right | right+left |
| Top/down | left | right |
| | right | left |

Referring to Table 1, when the side by side format is used and the LR_first value is 1, a left image may be positioned at a left region of the 3D video frame, and a right image may be positioned at a right region thereof. In addition, when the side by side format is used and the LR_first value is 0, the right image may be positioned at the left region of the 3D an video frame, and the left image may be positioned at the right region thereof.

When the top and town format is used and the LR_first value is 1, the left image may be positioned at an upper region of the 3D video frame, and the right image may be positioned at a lower region thereof. In addition, when the top and town format is used and the LR_first value is 0, the right image may be positioned at the upper region of the 3D video frame, and the left image may be positioned at the lower region thereof.

The descriptor may also include information indicating a codec type for performing encoding and decoding. In the case in which the codec type for the stereoscopic video service is not defined in the stream type, information on the codec type may be included in the descriptor. As described above in the example of FIG. 3, even in this case, the stream type may be used to identify a form of the stereoscopic video service. A field called CodecType may be defined in the descriptor in order to indicate the above-mentioned information.

The descriptor according to the example of FIG. 4 may be positioned at the 'B' portion within the PMT syntax of FIG. 2, for example. Here, the descriptor may also be called a stream level descriptor. The descriptors defined in the example of the present invention may have various form while including the above-mentioned information and are not limited to forms shown in each example.

Each of fields shown in the example of FIG. 4 is not defined in a single descriptor but may be defined in separate descriptors and may also be independently used. For example, stereoMono_service_flag and Stereoscopic_composition_type may be defined in the program level descriptor, and LR_first and CodecType may be defined in the stream level descriptor.

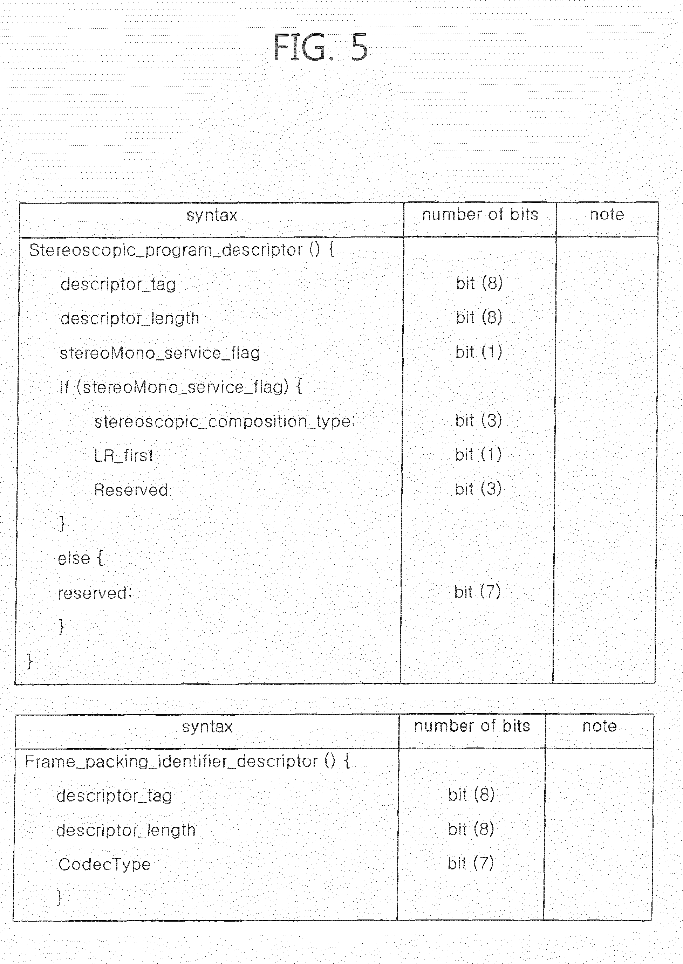

FIG. 5 is a diagram schematically showing another example of a descriptor structure used for a frame compatible based stereoscopic video service. FIG. 5 shows an example of the case in which each of the fields shown in the example of FIG. 4 is defined in separate descriptors.

Referring to FIG. 5, Sterepscopic_program_descriptor may include information stereoMono_service_flag indicating whether a type of the broadcasting service that is currently being provided is a 2D (monoscopic) broadcasting service or a 3D broadcasting service, information Stereoscopic_composition_type indicating a type of an video format, information indicating positions of left and right images, and/or information LR_first indicating whether a current video is a base video or an additional video.

In addition, Frame_packing_identifier_descriptor may include information CodecType indicating a codec type for a stereoscopic video service.

Each of the descriptors may be positioned at different levels within the PMT according to the example of FIG. 2 according to characteristics of the fields included therein. For example, the Sterepscopic_program_descriptor may be positioned at the 'A' portion within the PMT syntax of FIG. 2. Here, the Sterepscopic_program_descriptor may be called a program level descriptor. In addition, the Frame_packing_identifier_descriptor may be positioned at the 'B' portion within the PMT syntax of FIG. 2. Here, the Frame_packing_identifier_descriptor may be called a stream level descriptor.

The fields may also be defined in other descriptors according to characteristics thereof. For example, the LR_first field may also be defined in the stream level descriptor.

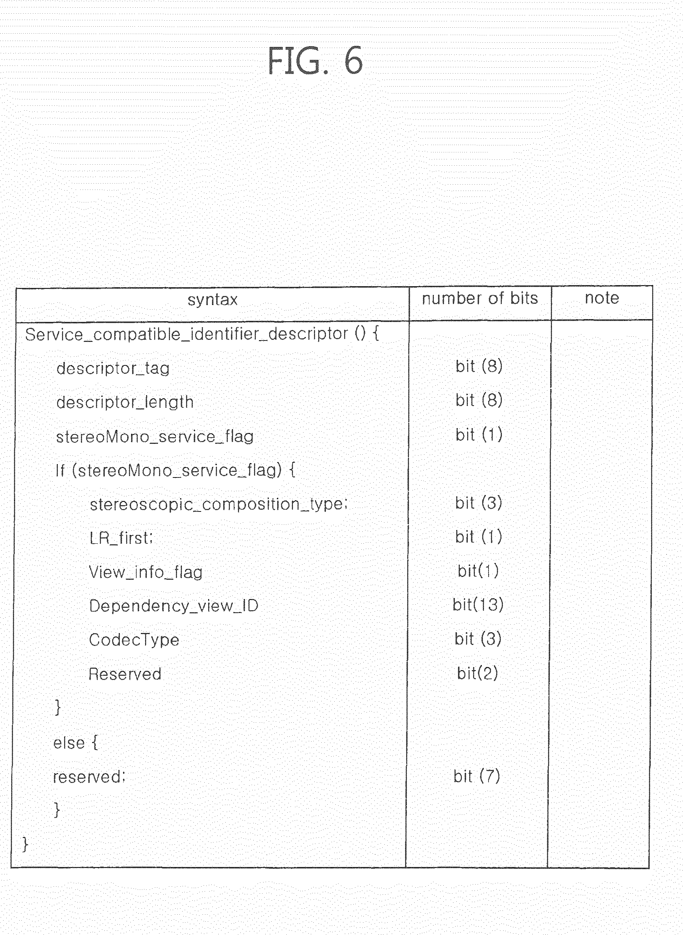

FIG. 6 is a diagram schematically showing an example of a descriptor structure used for a service compatible based stereoscopic video service. The descriptor according to the example of FIG. 6 may also be used for the frame compatible-compatible based stereoscopic video service. A description thereof will be described below.

In the service compatible based stereoscopic video service, a base video stream type may be 0x02 (an MPEG-2 video stream) and an additional video stream type may be 0x91 according to the example of FIG. 3. The service compatible based stereoscopic video service may maintain compatibility with an existing 2D medium or an existing 2DTV receiving apparatus. When the service compatible scheme of service is provided, a form a configuration, and the like, of the video may be identified through the descriptor according to the example of FIG. 6.

Hereinafter, descriptors according to the example of the present invention are not limited to their names. That is, descriptors performing roles that are equal or similar to those of the descriptors according to the example of the present invention will fall within the scope of the present invention. In addition, hereinafter, fields defined in the example of the present invention are not limited to their names. That is, fields indicating information that is equal or similar to that of the fields will fall within the scope of the present invention. In addition, all of the fields defined in the present invention need not to be used. That is, the fields may be used or may not be used as needed.

Referring to the example of FIG. 6, a descriptor may include information indicating whether a type of the broadcasting service that is currently being provided is a 2D (monoscopic) broadcasting service or a 3D broadcasting service. As an example, a field called stereoMono_service_flag may be defined in the descriptor in order to indicate the above-mentioned information.

In addition, the descriptor may include information indicating a type of an video format configuring the stereoscopic video. That is, which of video formats such as a side by side format, a top and down format, a left/right view sequence, and the like, is used may be discriminated according to the information. As an example, a field called Stereoscopic_composition_type may be defined in the descriptor in order to indicate the above-mentioned information.

The descriptor may include information indicating whether a current stream is a stream corresponding to the base video or a stream corresponding to the additional video. As an example, a field called LR_first may be defined in the descriptor in order to indicate the above-mentioned information. For example, when the value of the LR_first is 1, it may indicate the base video, and when the value of the LR_first is 0, it may indicate the additional video. As another example, when the value of the LR_first is 1, it may indicate that a left image is the base video, and when the value of the LR_first is 0, it may indicate that a right image is the additional video.

The descriptor may include information indicating whether a current stream is a stream corresponding to the left image or a stream corresponding to the right image. As an example, a field called View_info_flag may be defined in the descriptor in order to indicate the above-mentioned information.

When the descriptor according to the example of FIG. 6 is used for the frame compatible-compatible based stereoscopic video service, the View_info_flag may indicate whether the current stream is a base frame compatible stream or an additional frame compatible stream.

The descriptor may include information indicating an elementary stream packet identification (ES_PID) for the base video stream. When the additional video stream is transmitted through a separate channel different from a channel through which the base video is transmitter, the information may also indicate a channel ID of the base video indicating a relationship between channels. As an example, a field called Dependency_view_ID may be defined in the descriptor in order to indicate the above-mentioned information.

The descriptor may also include information indicating a codec type for performing encoding and decoding. In the case in which the codec type for the stereoscopic video service is not defined in the stream type, information on the codec type may be included in the descriptor. As described above in the example of FIG. 3, even in this case, the stream type may be used to identify a form of the stereoscopic video service. A field called CodecType may be defined in the descriptor in order to indicate the information on the codec type.

The descriptor according to the example of FIG. 6 may be positioned at the 'B' portion within the PMT syntax of FIG. 2, for example. Here, the descriptor may also be called a stream level descriptor. The descriptors defined in the example of the present invention may have various form while including the above-mentioned information and are not limited to form shown in each example.

Each of fields shown in the example of FIG. 6 is not defined in a single descriptor but may be defined in separate descriptors and may also be independently used. For example, stereoMono_service_flag and Stereoscopic_composition-type may be defined in the program level descriptor, and LR_first, View_info_flag, Dependency_view_ID, and CodecType may be defined in the stream level descriptor.

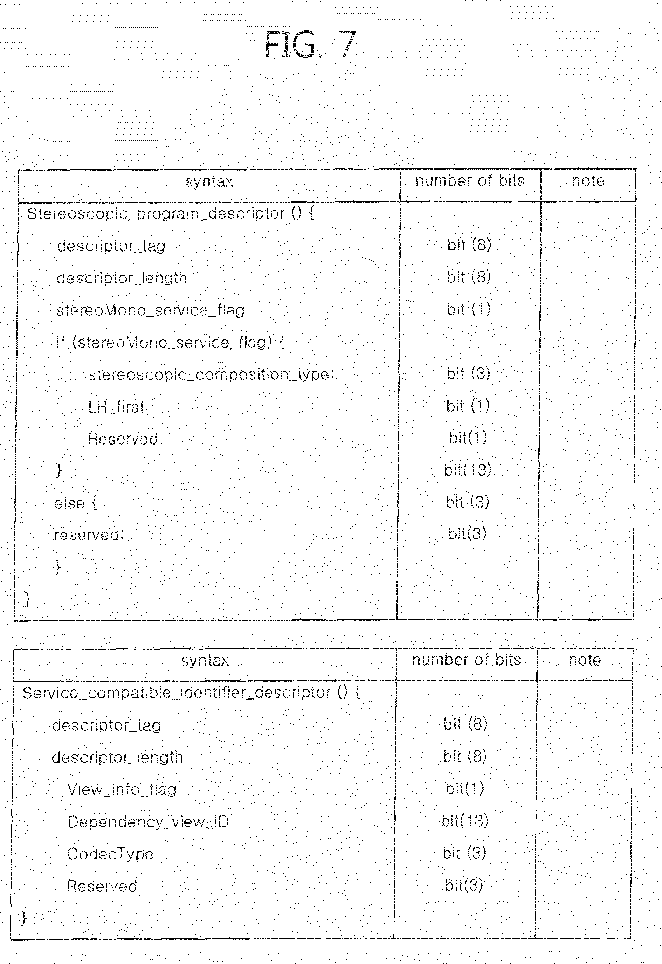

FIG. 7 is a diagram schematically showing another example of a descriptor structure used for a service compatible based stereoscopic video service. FIG. 7 shows an example of the case in which each of the fields shown in the example of FIG. 6 is defined in separate descriptors.

Referring to FIG. 7, Sterepscopic_program_descriptor may include information stereoMono_service_flag indicating whether a type of the broadcasting service that is currently being provided is a 2D (monoscopic) broadcasting service or a 3D broadcasting service, information Stereoscopic_composition-type indicating a type of an video format, andinformation LR_first indicating whether a current stream is a stream corresponding to the base video or a stream corresponding to the additional video.

In addition, Service_compatible_identifier_descriptor may include information View_info_flag indicating whether the current stream is a stream corresponding to the left image or a stream corresponding to the right image, information Dependency_view_ID indicating an elementary stream packet identification (ES_PID) for the base video stream, and information CodecType indicating a codec type for the stereoscopic video service.

Each of the descriptors may be positioned at different levels within the PMT according to the example of FIG. 2 according to characteristics of the fields included therein. For example, the Sterepscopic_program_descriptor may be positioned at the 'A' portion within the PMT syntax of FIG. 2. Here, Sterepscopic__program_descriptor may be called a program level descriptor. In addition, Service_compatible _identifier_descriptor may be positioned at the 'B' portion within the PMT syntax of FIG. 2. Here, Service_compatible _identifier_descriptor may be called a stream level descriptor.

The fields may also be defined in other descriptors according to characteristics thereof. For example, the LR_first field may also be defined in the stream level descriptor.

In the frame compatible-compatible based stereoscopic video service, a stream type of the base frame compatible stream may be 0x90 in the example of FIG. 3, and a stream type of the additional frame compatible stream may be 0x91 in the example of FIG. 3. The frame compatible-compatible based stereoscopic video service may maintain compatibility with a frame compatible based 3D medium or 3DTV receiver. When the frame compatible-compatible scheme of service is provided, a form a configuration, and the like, of the video may be identified through the descriptor according to the example of FIG. 6 or FIG. 7.

When the descriptor according to the example of FIG. 6 is used for the frame compatible-compatible based stereoscopic video service, it may be positioned at the 'B' portion within the PMT syntax of FIG. 2, for example. Here, the descriptor may also be called a stream level descriptor.

Each of fields shown in the example of FIG. 6 is not defined in a single descriptor but may be defined in separate descriptors and may also be independently used.

When the descriptor according to the example of FIG. 6 is used for the frame compatible-compatible based stereoscopic video service, it may be separated according to characteristics of the fields included therein, and each of the separated descriptors may be positioned at the 'A' and 'B' portions within the PMT syntax as in the example of FIG. 7. Here, the descriptor positioned at the 'A' portion may be called a grogram level descriptor, and the descriptor positioned at the 'B' portion may be called a stream level descriptor.

The descriptors defined in the example of the present invention may have various form and are not limited to forms shown in each example.

The descriptors used for the frame compatible-compatible based stereoscopic video service according to the example of FIG. 6 or FIG. 7 are not limited to their names. That is, descriptors performing roles that are equal or similar to those of the descriptors will fall within the scope of the present invention. In addition, fields defined in the example of the present invention are not limited to their names. That is, fields indicating information that is equal or similar to that of the fields will fall within the scope of the present invention. In addition, all of the fields defined in the present invention need not to be used. That is, the fields may be used or may not be used as needed.

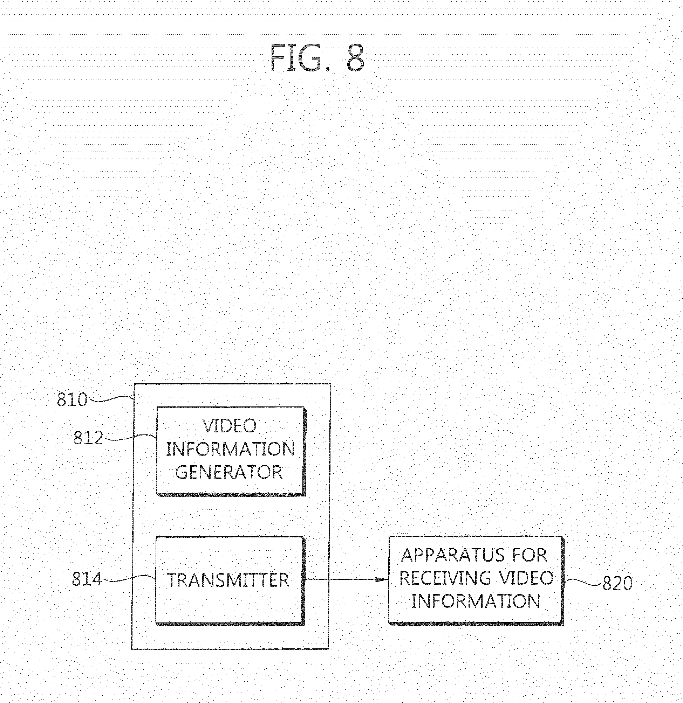

FIG. 8 is a block diagram schematically showing an apparatus for transmitting stereoscopic video information according to an exemplary embodiment of the present invention. FIG. 8 illustrates an apparatus 810 for transmitting stereoscopic video information and an apparatus 820 for receiving video information. The apparatus 810 for transmitting stereoscopic video information may include an video information generator 812 and a transmitter 814.

Referring to FIG. 8, the video information generator 812 may configure a signaling table. In the signaling table, information used to receive and reproduce video data in an apparatus for receiving video information, for example, information indicating a program type, information indicating characteristics of encoding streams configuring video data, and the like, may be defined.

The signaling table may be the PMT of the PSI, the VCT of the PSIP, and/or the EIT of the PSIP. Each information included in the signaling table may be defined in the stream type and/or the descriptor of the PMT, the stream type and/or the descriptor of the VCT, or the descriptor of the EIT. A description of the stream type and the descriptor included in the signaling table has been described in the examples of FIGS. 2 to 8.

The transmitter 814 may transmit video information including the signaling table information configured in the video information generator 812 and video data information to the apparatus 820 for receiving video information. The apparatus 820 for receiving video information may receive the video information and reproduce the stereoscopic video based on the received signal table information and video data information.

In the above-mentioned exemplary system, although the methods have been described based on a flow chart as a series of steps or blocks, the present invention is not limited to a sequence of steps but any step may generate in a different sequence or simultaneously from or with other steps as described above. Further, it may be appreciated by those skilled in the art that steps shown in a flow chart is non-exclusive and therefore, include other steps or deletes one or more steps of a flow chart without having an effect on the scope of the present invention.

The above-mentioned embodiments include examples of various aspects. Although all possible combinations showing various aspects are not described, it may be appreciated by those skilled in the art that other combinations may be made. Therefore, the present invention should be construed as including all other substitutions, alterations and modifications belong to the following claims.

## Claims

1. A method for transmitting stereoscopic video information based on digital broadcasting, the method comprising:
configuring a signaling table including stream type information including information indicating a stereoscopic video service scheme; and
transmitting the video information including the signaling table information and video data information.
wherein the stream type information includes a stream type of an additional video included in a service compatible based stereoscopic video.

2. The method of claim 1, wherein the signaling table is a program map table (PMT) of program specific information (PSI), a virtual channel table (VCT) of program and system information protocol (PSIP), or an event information table (EIT) of the PSIP.

3. The method of claim 1, wherein the signaling table includes information indicating whether a type of a broadcasting service that is currently being provided is a 2D (monoscopic) broadcasting service or a 3D broadcasting service.

4. The method of claim 3, wherein the signaling table includes a program level descriptor including information indicating a grogram type provided in the digital broadcasting, and
the information indicating whether the type of the broadcasting service that is currently being provided is the 2D (monoscopic) broadcasting service or the 3D broadcasting service is defined in the grogram level descriptor.

5. The method of claim 1, wherein the signaling table includes information indicating whether a current stream is a stream corresponding to a left image or a stream corresponding to a right image.

6. The method of claim 5, wherein the signaling table includes a stream level descriptor including information indicating characteristics of elementary streams configuring the video data, and
the information indicating whether the current stream is the stream corresponding to the left image or the stream corresponding to the right image is defined in the stream level descriptor.

7. The method of claim 1, wherein the signaling table includes information indicating whether a current stream is a stream corresponding to a base video or a stream corresponding to the additional video.

8. The method of claim 7, wherein the signaling table includes a stream level descriptor including information indicating characteristics of elementary streams configuring the video data, and
the information indicating whether the current stream is the stream corresponding to the base video or the stream corresponding to the additional video is defined in the stream level descriptor.

9. An apparatus for transmitting stereoscopic video information based on digital broadcasting, the apparatus comprising:
an video information generator configuring a signaling table including stream type information including information indicating a stereoscopic video service scheme; and
a transmitter transmitting the video information including the signaling table information and video data information,
wherein the stream type information includes a stream type of an additional video included in a service compatible based stereoscopic video.

10. The apparatus of claim 9, wherein the signaling table includes information indicating whether a type of a broadcasting service that is currently being provided is a 2D (monoscopic) broadcasting service or a 3D broadcasting service.

11. The apparatus of claim 10, wherein the signaling table includes a program level descriptor including information indicating a program type provided in the digital broadcasting, and
the information indicating whether the type of the broadcasting service that is currently being provided is the 2D (monoscopic) broadcasting service or the 3D broadcasting service is defined in the grogram level descriptor.

12. The apparatus of claim 9, wherein the signaling table includes information indicating whether a current stream is a stream corresponding to a left image or a stream corresponding to a right image.

13. The apparatus of claim 12, wherein the signaling table includes a stream level descriptor including information indicating characteristics of elementary streams configuring the video data, and
the information indicating whether the current stream is the stream corresponding to the left image or the stream corresponding to the right image is defined in the stream level descriptor.

14. The apparatus of claim 9, wherein the signaling table includes information indicating whether a current stream is a stream corresponding to a base video or a stream corresponding to the additional video.

15. The apparatus of claim 14, wherein the signaling table includes a stream level descriptor including information indicating characteristics of elementary streams configuring the video data, and
the information indicating whether the current stream is the stream corresponding to the base video or the stream corresponding to the additional video is defined in the stream level descriptor.
